# EUROPÄISCHE PATENTSCHRIFT

(11) **EP 0 633 898 B1**
(45) Veröffentlichungstag und Bekanntmachung des Hinweises auf die Patenterteilung: **04.06.1997**
(21) Anmeldenummer: 93906613.0
(22) Anmeldetag: 25.03.1993
(51) Int. Cl.: C08F 8/44, C04B 24/26

(54) **IONISCHE POLYMERE**
IONIC POLYMERS
POLYMERES IONIQUES

(30) Priorität: 03.04.1992 DE 4211118
(43) Veröffentlichungstag der Anmeldung: 18.01.1995
(73) Patentinhaber: Henkel Kommanditgesellschaft auf Aktien, 40191 Düsseldorf (DE)
(72) Erfinder: KLAUCK, Wolfgang, D-4005 Meerbusch (DE); RUST, Ernst-Ulrich, D-5060 Bergisch-Gladbach 2 (DE); DAUTE, Peter, D-4300 Essen 1 (DE); KLEIN, Johann, D-4000 Düsseldorf 1 (DE); WILLEKE, Ludger, D-4200 Oberhausen 12 (DE)
(86) Internationale Anmeldenummer: EP9300727
(87) Internationale Veröffentlichungsnummer: WO9320114

(56) Entgegenhaltungen:
- EP-A- 0 342 276
- EP-A- 0 454 224
- DE-B- 1 273 100
- FR-A- 1 490 970
- US-A- 2 614 998

## Beschreibung

Die Erfindung betrifft ionische Polymere, die lediglich durch Verknüpfung mehrwertiger Metall-Ionen und Carbonsäuren über Salzbrücken herstellbar sind, sowie ihre Herstellung und Verwendung.

Als ionische Polymere werden Polymere bezeichnet, die ionische Gruppen als Bestandteile der Hauptkette oder seitenständig zu ihr enthalten. Je nach Gehalt an Ionen kann man sie in Polyelektrolyte und Ionomere einteilen. Polyelektrolyte weisen einen hohen Ionenanteil auf und sind in der Regel wasserlöslich, z.B. Polymethacrylsäure oder Polyacrylsäure. Ionomere sind dagegen in der Regel wasserunlöslich aufgrund ihrer nur wenig polaren Hauptkette und ihres relativ kleinen Gehaltes an ionischen Gruppen. Bekannt sind Polyacrylate, Polyurethane und insbesondere thermoplastische Copolymere des Ethylens mit Carboxy-Gruppen enthaltenden Monomeren, insbesondere Methacrylsäure, die partiell als Salze von Natrium, Kalium, Magnesium oder Zink vorliegen. Aufgrund der Ionenbindung sind sie thermo-reversibel vernetzt. Sie werden z.B. als Folien für Verpackungs- und Beschichtungsmaterialien verwendet, u.a. auch als selbstklebende Filme.

Dem Fachmann ist auch bekannt, daß Carboxylgruppen-stabilisierte Dispersionen (anionische Dispersionen) im Kontakt mit mehrwertigen gelösten Kationen (z.B. Ca²⁺, Zn²⁺, Al³⁺ usw.) leicht koagulieren können, weil unlösliche Carboxylatsalze die Emulgatorwirkung aufheben. Dieses Prinzip wird bekannterweise eingesetzt, um Dispersionen mit Carboxylgruppen durch komplexierte Zn- oder Zr-Ionen nach Trocknung und Verdampfung des Liganden in der Wasserfestigkeit und Klebfreiheit der Filme zu verbessern (z.B.: EP 0 197 662, DE 23 37 606, DE 38 00 984). Ionenverträgliche Dispersionen sind daher in der Regel kationisch oder nichtionisch stabilisiert.

Des weiteren ist aus Arbeiten von Matsuda und Kothandaraman (z.B.: H. Matsuda, Journal of Polymer Science 12, 455-468 (1974); H. Kothandaraman, Polymer Bulletin 13, 353-356 (1985)) bekannt, daß spezielle in Lösemittel hergestellte kurzkettige OH-endständige Verbindungen mit einer Carboxylgruppe ihre Eigenschaften wie z.B. Schmelzpunkt durch Dimerisation mit zweiwertigen Salzen verändern. Diese über mehrwertige Ionen verbrückte Feststoffe lassen sich nach Auflösung in organischen Lösemitteln mit aromatischen oder aliphatischen Diisocyanaten zu glasartigen Polymeren umsetzen.
Als weniger relevante Dokumente seien noch genannt:
Die DE 1 273 100 betrifft ein trockenes Bindemittel für wäßrige Lacke auf der Grundlage von Ammonium- bzw. Aminsalzen von Produkten der teilweisen Veresterung von Polycarbonsäuren mit ungesättigten, hydroxylgruppenhaltigen Verbindungen. Sie sind dadurch charakterisiert, daß sie aus den Salzen der Teilveresterungsprodukte von einem aus Maleinsäureanhydrid und einem damit mischpolymerisierbaren Monomer im Molverhältnis 1 : 1 hergestellten Mischpolymerisat als Polycarbonsäure einerseits mit einem Halbester von Glykolen mit ungesättigten Fettsäuren und/oder einer ungesättigten Hydroxyfettsäure als Hydroxyverbindung andererseits bestehen. Die US 2 614 998 betrifft einen Zement, der beim Mischen mit Wasser einen flüssigen Brei ergibt. Der Zement enthält einen hydraulischen Zement im Gemisch mit einem wasserlöslichen Harz aus wasserlöslichen Salzen von Polyacrylsäure und von Polyacrylamiden mit Carbonsäuregruppen.

Die EP 0 454 224 betrifft die Herstellung von Emulgatoren auf der Basis von polymeren Fettsäuren. Von Salzen ist keine Rede. Die FR 1 490 970 betrifft eine vernetzbare Zusammensetzung aus einem Polymeren mit Carbonsäuregruppen, einem in Wasser hydrolysierbaren Oxid, welches bei der Hydrolyse eine Base ergibt und aus einer ausreichenden Menge eines Vernetzers über kovalente Bindungen.

Aus dem Stand der Technik ist jedoch kein System bekannt, das insbesondere bei Raumtemperatur verarbeitbare Oligomere lediglich durch Verknüpfung einzelner Fett- und Öl-basierter Oligomerbausteine über Salzbrücken mehrwertiger Ionen zu anwendungstechnisch brauchbaren Eigenschaften beschreibt.

Die im Zuge der verstärkten Umweltdiskussion ständig steigende Nachfrage nach umweltverträglicheren Produkten in Bereichen wie Dichtstoffe, Beschichtungen (z.B. Lacke und Farben), Klebstoffe, Kunststoffverarbeitung und Brandschutz konnte bisher nur bedingt befriedigt werden. Sowohl organische Lösemittel als auch Restmonomere oder chlorhaltige Polymere gilt es, durch alternative Systeme zu eliminieren. So substituierten beispielsweise wäßrige Polymerdispersionen in den letzten Jahrzehnten mehr und mehr in organischen Lösemitteln gelöste Polymere. Die Aushärtung oder Abbindung derartiger Produkte erfolgt durch Abdunstung der flüssigen Phase, was mit einem erheblichen Volumenschwund und bei wasserbasierten Systemen mit einer hohen Abhängigkeit der Trockenzeit von den klimatischen Bedingungen verbunden ist oder sein kann.

Neben Systemen, die die zur Erlangung der Endeigenschaften schon vorgefertigten Polymeren enthalten, gibt es auch Reaktivsysteme, die basierend auf Monomeren oder Oliogmeren 1- oder 2-komponentig durch chemische Reaktionen aushärten. Cyanacrylate, NCO-terminierte Polyurethane, die durch die Einwirkung von Feuchtigkeit abbinden bzw. vernetzten oder 2-komponentige Epoxide und Polyurethane sind dem Fachmann wohl bekannt. Die 2-komponentigen Produktformulierungen, die aus Harz und Härter bestehen, enthalten wie die 1-komponentigen Reaktivsysteme oftmals sehr reaktive, toxikologisch bedenkliche Monomere oder Restmonomere bzw. bilden während der Anwendung ungewünschte Abspaltungsprodukte, was in der Regel durch Warnhinweise (Kennzeichnung) dem Verbraucher mitgeteilt werden muß.

Vorteile von Reaktivsystemen sind z.B. die relativ niedrige Ausgangsviskosität - die hochmolekularen Polymeren werden erst während der Härtung gebildet - oder die Möglichkeit 100 %ige Systeme ohne nennenswerten Volumenschwund zu realisieren. Es wäre äußerst wünschenswert, die Vorteile von den bekannten 1- und 2-komponentigen Reaktivsystemen auszunutzen, aber auf toxikologisch günstigere, umweltverträglichere Ausgangsmonomere bzw. Oligomere zurückgreifen zu können.

Überraschenderweise wurde nun gefunden, daß bei der Applikationstemperatur, insbesondere Raumtemperatur, flüssige bzw. noch verstreichbare, toxikologisch nahezu unbedenkliche Carbonsäuren durch mehrwertige Ionen und eventuell Feuchtigkeit zu anwendungstechnisch hochwertigen Polymerstrukturen aushärten ("Ionenhärtung"). Bei Raumtemperatur nicht verstreichbare, hochviskose oder feste Materialien mit analogem Aufbau können nach dem gleichen Prinzip zusätzlich innerlich verfestigt werden, wie z.B. das von nachhärtenden Schmelzklebstoffen über die Isocyanatvernetzung bekannt ist.

Gegenstand der Erfindung sind also ionische Polymere, die lediglich durch Verknüpfung von Carbonsäuren und mehrwertigen Metall-Ionen über Salzbrücken herstellbar sind, wobei die Carbonsäuren auf Fetten und Ölen basieren und zu mindestens 70 % ein Molekulargewicht von größer als 200 g haben. Die Fette oder Öle bzw. daraus hergestellte Derivate können sowohl pflanzlichen als auch tierischen Ursprungs sein oder gegebenenfalls gezielt auf petrochemischem Weg synthetisiert werden.

Als Carbonsäuren kommen Vertreter aller Öl- und Fett-basierten Rohstoffe in Frage, die durchschnittlich mindestens eine, vorzugsweise 1 bis 10, insbesondere 2 bis 5 Carbonsäuregruppen pro Oligomermolekül enthalten oder durch Reaktion mit Wasser freisetzen können. Sie sind z.B. durch En-Reaktionen, Umesterungen, Kondensationsreaktionen, Pfropfung (z.B. mit Maleinsäureanhydrid oder Acrylsäure usw.) und z.B. Epoxidierungen mit anschließender Ringöffnung zugänglich. Derartige fettchemische Grundreaktionen lassen sich bevorzugt an Fetten und Ölen mit Doppelbindungen und/oder OH-Gruppen durchführen, z.B. an Fetten und Ölen von Raps (neu), Sonnenblumen, Soja, Lein, Kokosnüssen, Ölpalmen, Ölpalmkernen und Ölbäumen. Bevorzugte Fette und Öle sind z.B. Rindertalg mit einer Kettenverteilung von 67 % Ölsäure, 2 % Stearinsäure, 1 % Heptadecansäure, 10 % gesättigte Säuren der Kettenlänge C₁₂ bis C₁₆, 12 % Linolsäure und 2 % gesättigte Säuren >C₁₈ Kohlenstoffatomen oder z.B. das Öl der neuen Sonnenblume (NSb) mit einer Zusammensetzung von ca. 80 % Ölsäure, 5 % Stearinsäure, 8 % Linolsäure und ca. 7 % Palmitinsäure.

En-Reaktionen werden bei erhöhter Temperatur mit z.B. Säureanhydriden an ungesättigten Fetten und Ölen durchgeführt. Epoxidierungen von Doppelbindungen und anschließende Ringöffnung mit z.B. Aminen, Aminoalkoholen, Alkoholen, Diolen, Polyolen, Hydroxycarbonsäuren oder Polycarbonsäuren ermöglichen z.B. den Zugang zu den benötigten Fett- und Öl-basierten Ausgangsrohstoffen mit Säure- oder Säureanhydridgruppen. Auch die Fettsäuren als Spaltprodukte der Fette und Öle mit ungesättigten Gruppen oder OH-Funktionen können für derartige Reaktionen herangezogen werden. Weitere Reaktionen wie z.B. simultane oder nachträgliche Kondensations- oder Umesterungsreaktionen können zu einem Molekulargewichtaufbau der COOH-terminierten Fett- und Öl-basierten Bausteine führen.

Der Oligomerisationsgrad bzw. das Molekulargewicht und die Art der Ausgangsrohstoffe sollten nach dem Fachmann allgemein bekannten Gesichtspunkten so gewählt werden, daß das resultierende Oliogomere bei der entsprechenden Verarbeitungstemperatur (z.B. auch Raumtemperatur) verstreichbar oder verarbeitbar ist.

Als mehrwertige Metallionen - bevorzugt im Oxidationszustand +2 bis +4 - eignen sich alle die Ionen, die mit Carboxylgruppen schwerlösliche Komplexe bilden, wie dies beispielsweise von Metallseifen bekannt ist. Bevorzugte geeignete Kationen sind Ca, Be, Mg, Al, Zn, Sr, Cd, Ba, Hg, Sn, Zr, Pb, Ti, V, Cr, Co, Mn, Cu, Bi, Fe und Ni. Davon sind besonders geeignet: Mg, Ca, Al, Sn und Zr. Auch die einwertigen Metallionen Li, Na, K, Cu, Rb, Ag, Cs, davon bevorzugt Li, Na, K können bei zu einem stöchiometrischen Anteil von bis zu 65 % bevorzugt bis zu 30 %, bezogen auf den Gesamtgehalt der Kationen, mitverwendet werden. Als Gegenionen sind prinzipiell alle organischen und anorganischen Anionen geeignet wie z.B. Halogene, insbesondere F und Cl, Nitride, Nitrate, Sulfite, Carbonate, Hydrogencarbonate, Chlorate, Perchlorate, Hydroxide, Oxide, Formiate, Acetate und Propionate und deren Hydrate. Bevorzugte Ausführungsformen enthalten Hydroxide, Oxidhydrate, Oxide und/oder Carbonate, insbesondere Aquoxide. Unter Aquoxiden werden alle Verbindungen von mehrwertigen Metallen verstanden, die sich experimentell oder formal aus Oxid und Wasser ableiten lassen, also Hydroxide, Oxidhydrate und Oxidaquate.
Es wurden bis zu 90 Gew.-%, bevorzugt bis zu 40 %, insbesondere bis zu 20 Gew.-% an Salz zugesetzt.

Die erfindungsgemäßen Formulierungen setzen sich aus einer feinteiligen Suspension von Salzen mehrwertiger Metallionen und gegebenenfalls leicht alkalisch reagierenden Zusatzstoffen oder derartig reagierende Salze in einem Carboxylgruppen-tragenden Oligomer zusammen. Die benötigten Salze können sowohl in freier Form als auch beispielsweise an Oberflächen adsorbiert (z.B.: Aluminiumoxid, Kieselgel oder Tone), gelöst bzw. mikroverkapselt vorliegen, um z.B. die Feinteiligkeit zu verbessern oder eine gewisse Reaktionsverzögerung zu ermöglichen.

Des weiteren sind auch handelsübliche Mörtelmassen, Gipse und Zemente, die Ca-, Mg-, Al- oder Fe-Ionen enthalten, als potentielle Kationenspender geeignet. Dabei werden also die beanspruchten ionischen Polymere dadurch hergestellt, daß die Carbonsäuren oder Anhydride auf einem Hintergrund aufgetragen werden, der die mehrwertigen Metallionen bereits enthält. In diesem Fall können beide Härtungsmechanismen (Abbinden der Mörtel, Gipse und Zemente und die Vernetzung der Carbonsäuren) gleichzeitig ablaufen, so daß hier die Endeigenschaften der Formulierungen in einem sehr weiten Intervall durch Variation der Konzentrationen der Einzelkomponenten maßgeschneidert werden können.

Es lassen sich die erfindungsgemäß hergestellten Carboxylgruppenhaltigen Fett- und Öl-basierten Formulierungen nicht nur mit bis zu einigen Prozenten der salzhaltigen Mörtel, Gipse, Zemente usw. härten, sondern auch umgekehrt: Die anorganischen Materialien lassen sich durch Zusatz einiger Prozente bei Raumtemperatur flüssiger Oligomerer modifizieren (z.B.: hydrophobieren oder elastifizieren).

Zur Katalyse der Reaktion zwischen den Metallsalzen und den COOH-terminierten fettchemischen Rohstoffe können die Katalysatoren eingesetzt werden, die z.B. auch bei der Seifenherstellung Einsatz finden. Neben den dort bevorzugt eingesetzten Aminen kommen noch OH-Gruppen-haltige Rohstoffe wie z.B. Glycerin, Polyole, Sorbit, Zucker in Betracht. Des weiteren katalysieren auch OH-Gruppen, die an den fettchemischen Rohstoffen fixiert sind, die Reaktion.

Die Komponenten "Carbonsäure" und "Metall-Ionen" können sowohl getrennt (zweikomponentige Formulierung) als auch vereint (einkomponentige Formulierung) vorliegen. Im getrennten Fall sollten die mehrwertigen Salze entweder auf dem Untergrund aus wäßriger Lösung vorher aufgetragen werden (Primer), im Untergrund schon vorhanden sein (z.B. mineralische Untergründe) oder eingerührt werden. Die Salze sollten feinteilig suspendiert sein. Eine stärkere Feinteiligkeit erhöht die Aushärtegeschwindigkeit. Liegen die salzartigen Verbindungen und die Fett- und Öl-basierten Carboxylgruppen-tragenden Ausgangsrohstoffe vereint vor (einkomponentige Formulierung), kann die Abbindung entweder durch Temperaturerhöhung oder Feuchtigkeitszufuhr eingeleitet werden. Feuchtigkeitshärtende Systeme basieren beispielsweise auf Strukturen, die die Carboxylgruppen erst nach einer Vorreaktion mit Wasser entwickeln (z.B. säureanhydrid-haltige Fett- und Öl-basierte Rohstoffe).

In einer bevorzugten Ausführungsform der Erfindung umfaßt das 1-komponentige feuchtigkeitshärtende Ausgangsgemisch zur Herstellung der ionischen Polymeren eine Mischung von Anhydriden und Metallsalzen.

Gemäß einer weiteren bevorzugten Ausführungsform der Erfindung werden die ionischen Polymere dadurch hergestellt, daß die Carbonsäure oder das Anhydrid auf einen Untergrund aufgetragen wird, der die mehrwertigen Metall-Ionen bereits enthält.

Schließlich werden die erfindungsgemäßen Polymere vorzugsweise durch eine Aushärtung der Mischung aus Carbonsäuren und Metallionen bei Raumtemperatur (20 °C ± 15 °C) hergestellt.

Difunktionale COOH-terminierte Oligomerbausteine führen idealisiert insbesondere mit zweiwertigen Ionen zu linearen Strukturen, trifunktionale (oder noch höherfunktionale) zu vernetzten Strukturen, ebenso difunktionale Bausteine mit dreiwertigen Ionen, während einwertige Ionen den Kettenaufbau stoppen. Die Zusammensetzung der Oligomeremoleküle bezüglich ihrer Polyfunktionalität wird so gewählt, daß die für den anvisierten Zweck optimalen Eigenschaften erreicht werden. Hochelastische Filme sollten bevorzugt auf linearen Strukturen basieren. Hochfeste Massen können, wie dem Fachmann ebenfalls bekannt, vernetzende Einheiten enthalten. Um die Mechanik der ionisch verbrückten Bausteine zu verbessern, sollte das Molekulargewicht der fettchemischen Rohstoffe größer als 200, bevorzugt größer als 400 sein und der Umsetzungsgrad nicht zu hoch, d.h. kleiner als 1 : 2 gewählt werden, bevorzugt kleiner als 1 : 1,5 jeweils in Äquivalenten an COOH zu Metallwertigkeit.

In Anteilen < 30 %, bevorzugt < 10 %, können gegebenenfalls auch kurzkettige mehrwertige Säuren mit Molekulargewichten < 200 wie z.B. Oxalsäure, Adipinsäure, Maleinsäure, Phthalsäure, Sebacinsäure, Malonsäure, Bernsteinsäure, Glutarsäure, Apfelsäure, Weinsäure, Zitronensäure bzw. deren Anhydride mitverwendet werden.

Auch Kunststoff-Formulierungen, die zur Modifikation einige Prozent (kleiner als 40 %) der beschriebenen ionisch verbrückten Polymeren enthalten oder Formulierungen, die einige Prozent (kleiner als 40 %) anderer Kunststoffe wie z.B. Copolymere von Ethylen und Vinylacetat, Polyamid, Polyester, Polyurethan, Polyacrylat usw. sind möglich.

Die über mehrwertige Ionen verknüpften auf fettchemischen Bausteinen basierten Säuren lassen sich auch zu Dispersionen weiterverarbeiten. Eine bevorzugte Ausführungsform der Erfindung ist es daher, die ionischen Polymere in Form von Dispersionen zu verwenden. Die Dispergierung kann dabei über innere Emulgatoren - z.B. neutralisierte, nicht umgesetzte COOH-Gruppen-und/oder äußere Emulgatoren nichtionischer und ionischer Art erfolgen. Äußere Emulgatoren können sowohl niedermolekulare Verbindungen als auch Polymere sein. Dem Fachmann sind solche Emulgatoren bzw. Tenside bekannt und in zahlreichen Nachlagwerken zugänglich (z.B. Tensid-Taschenbuch, Dr. Helmut Stache, 2. Auflage, 1981, Carl Hanser-Verlag, München-Wien, insbesondere Seiten 771 bis 978).

Des weiteren können auch anionische oder nichtionische stabilisierte Polymerdispersionen (z.B. Acrylate oder Polyurethane) als Emulgatoren zugesetzt werden, wobei bekanntermaßen mit größerer Hydrophilie die emulgierende Wirkung zunimmt. Schutzkolloide, wie sie bei der Herstellung von Polymerdispersionen (z.B. Polyvinylacetat + Copolymere) mitverwendet werden (z.B. Stärke, Stärkederivate, Cellulosederivate, Polyvinylalkohole usw.) können ebenfalls zugegeben werden. In Formulierungen können die derart hergestellten Dispersionen mit ionisch verbrückten Säuren auch mit handelsüblichen Dispersionen abgemischt werden, wobei anionisch und nichtionisch stabilisierte Dispersionen die beste Stabilität aufweisen.

Die erfindungsgemäßen ionischen Polymere lassen sich zweckmäßigerweise verwenden
- als Klebstoffe, insbesondere als Dispersions-, Haft-, Schmelz-und 2-Komponenten-Klebstoff sowie als Verpackungs- und Dach-Klebstoff,
- als Spachtelmasse und Dichtstoff und
- für Beschichtungen.

Die erfindungsgemäßen Polymerstrukturen zeichnen sich auch durch eine flammschützende Wirkung aus. Eine durch die Metallsalze katalysierte CO₂-Abspaltung bzw. eine bei Temperaturerhöhung stattfindende Wasserabspaltung stellen mögliche Ursachen für diesen beobachteten Effekt dar. Vorzugsweise lassen sich die erfindungsgemäßen ionischen Polymere als Füllstoff, insbesondere als Flammschutzmittel für Kunststoffe verwenden.

Die Erfindung wird nun im einzelnen beschrieben:

### Beispiele

### A) harte Masse

### Beispiel 1

1 Mol Dt-Dö 1447 (Umsetzungsprodukt aus vollepoxidiertem Sojaöl mit Dimerfettsäure im Verhältnis 1 : 1, bezogen auf Mol Dimerfettsäure pro Epoxidgruppe), wird bei 30 °C mit 1 Mol Ca (OH)₂ umgesetzt. Nach 48 Std. wird eine hartelastische Masse erhalten.

### Beispiel 2

1 Mol Dt-Dö 1448 (Umsetzungsprodukt aus vollepoxidiertem Sojaöl mit Dimerfettsäure, pro Epoxidgruppe 0,8 Mol Dimerfettsäure) wird bei 25 °C mit 1,5 Mol MgO umgesetzt. Nach 24 Std. wird eine harte Masse erhalten.

### Beispiel 3

1 Mol Dt-Dö 1498 (Umsetzungsprodukt aus vollepoxidiertem Leinölepoxid mit Dimerfettsäure, pro Epoxidgruppe 1,5 Mol Dimerfettsäure) werden bei 25 °C mit 1 Mol MgO und 0,2 Mol Glycerin gemischt. Nach 1 Std. wird eine feste dennoch elastische Masse erhalten.

### B) haftklebrige Masse

### Bespiel 4

1 Mol Dt-Dö 1447 wird bei 80 °C innerhalb von 20 Minuten mit 0,65 Mol MgO umgesetzt. Nach Abkühlung erhält man eine nicht fließfähige haftklebrige Masse.

### C) elastische Masse

(Polyionisate mit Polymerzusätzen zur Verbesserung der mechanischen Eigenschaften)

### Beispiel 5

80 Gew.-Teile Dt-Dö 1448 werden nach Umsetzungen mit 1,5 Gew.-Teilen MgO bei 140 °C mit 20 Gew.-Teilen Luviskol K 30 (Polyvinylpyrrolidon der BASF) umgesetzt. Nach Abkühlung erhält man eine elastische, nicht klebfreie Masse.

### Beispiel 6

60 Gew.-Teile Dt-Dö 1347 (Umsetzungsprodukt aus 2 Mol Stearinsäuremethylesterepoxid mit 1 Mol Ethylenglykol und anschließend Esterhydrolyse zur Glykol-verbundenen Dicarbonsäure) werden nach Umsetzung von 2,5 Gew.-Teilen MgO und 1 Gew.-Teil ZnO bei 150 °C mit 40 Gew.-Teilen Escorene UL-05540 (Ethylen-Vinylacetat-Copolymer) umgesetzt. Es entsteht nach Abkühlung eine elastische transparente Masse, die auch als Schmelzklebstoff geeignet ist.

### D) Dlastische Masse (Knetmasse)

### Beispiel 7

24,8 Gew.-Teile Dt-Dö 1347 werden bei 30 °C mit 1 Gew.-Teil MgO umgesetzt und anschließend in einem Kneter 74,5 Gew.-Teile Kreide (Fa. Grünsiegel, Wical) eingearbeitet. Die entstehende Masse ist mit der Hand knet- und formbar und eignet sich als dauerplastischer Dichtstoff.

### E) feuchtigkeitshärtende Systeme

### Beispiel 8

90 Gew.-Teile Stru-DH 4844 (Umsetzungsprodukt aus Maleinsäureanhydrid/Sonnenblumenöl 3 : 1 bie 210 °C unter N₂ 6 Std. gerührt) und 10 Gew.-Teile MgO werden gemischt.

Es entsteht eine mindestens 3 Monate lagerstabile Mischung, die als Film auf einem Substrat (Glasplatte) aufgetragen (0,2 mm Schichtdicke innerhalb von 24 bis 48 Std. vollständig aushärtet. Diese Beschichtungsmasse eignet sich auf für feuchte Untergründe, wo die Aushärtung schneller erfolgen kann.

### Beispiel 9

Die Mischung aus Beispiel 8 wird mit 2 % Wasser versetzt. Nach Homogenisierung erfolgt innerhalb weniger Minuten eine exotherme Aushärtung. Filme dieses ausgehärteten Materials unterscheiden sich von denen aus Beispiel 8 nicht.

### F) Dispersionen

### Beispiel 10 (Vergleichsbeispiel zu Nr. 11)

Dt-Dö 1447 wurde in kaltes H₂O eingerührt und mit NaOH zu 60 % neutralisiert. Es entsteht eine feinteilige stark haftklebrige Dispersion (Festkörpergehalt 35 %) mit starkem Klebstoffübertrag, die als Haftklebstoff nicht eingesetzt werden kann (Zugscherfestigkeiten an Buchenholz 0,03 N/mm², 10 cm² Überlappung). D.H. beim Lösen der Verklebung bleibt sehr viel Klebstoff auf beiden Fügeteilen.

### Beispiel 11

Dt-Dö 1447 wurde auf die Carboxylgruppen, bezogen zu 65 % mit MgO verbrückt und bei 100 °C in 90 °C heißes Wasser, das die entsprechende Menge NaOH enthält, die zur Neutralisation der restlichen 35 % Carboxylgruppen benötigt werden, eindispergiert. Es entstand eine weiße Dispersion (Festkörpergehalt 40 %) mit Zugscherfestigkeiten an Holz von 3 N/mm².

### Beispiel 12

Analog Beispiel 11 wurde die Umsetzung mit MgO durchgeführt und gleichzeitig 20 Gew.-Teile Balsamharz in die Schmelze bei 100 °C zugegeben. Bei der Dispergierung wurde der Gehalt an NaOH so erhöht, daß auch die Carboxylgruppen des Balsamharzes neutralisiert wurden. Es wurde eine homogene Dispersion erhalten mit 5,0 N/mm² Zugscherfestigkeiten an Holz.

### Beispiel 13

Analog Beispiel 11 wurde eine Dispersion hergestellt, die im Wasser vor der Dispergierung - auf den Festkörper des ionisch verknüpften Schmelzanteils bezogen - 30 % der feinteiligen Polyurethandispersion Pritt Alleskleber (Verkaufsprodukt der Fa. Henkel, anionische PUR-Dispersion, basierend auf Isophorondiisocyanat, Polytetrahydrofuran und Dimethylolpropionsäure, neutralisiert mit NaOH, Festkörpergehalt 35 %) enthielt. Es wurde eine Dispersion enthalten mit einem Festkörpergehalt von 38 % und Zugscherfestigkeiten an Holz von 4 N/mm².

### Messung der Zugscherfestigkeit

Die Zugscherfestigkeit wurden an Prüfkörpern der Dimension 10 x 5 x 0,5 cm³ mit einer Zerreißgeschwindigkeit von 10 cm/min durchgeführt. Vorher wurden die Prüfkörper nach Verkleben 3 Tage bei Raumtemperatur gelagert. Die Überlappung der Prüfkörper betrug 2 cm x 5 cm (Klebefläche). Dieses Prüfverfahren ist in Anlehnung an die DIN 53254 entwickelt worden.

## Patentansprüche

1. Ionische Polymere, erhältlich lediglich durch Verknüpfung mehrwertiger Metall-Ionen und Carbonsäuren über Salzbrücken, dadurch gekennzeichnet, daß die Carbonsäuren auf Fetten und Ölen basieren und ein Molekulargewicht von größer als 200 haben, wobei in Anteilen < 30% gegebenenfalls auch kurzkettige mehrwertige Säuren mit Molekulargewichten < 200 mitverwendet werden können.

2. Ionische Polymere nach Anspruch 1, dadurch gekennzeichnet, daß die Carbonsäuren 1- bis 10-wertig sind, bevorzugt 2 bis 5.

3. Ionische Polymere nach mindestens einem der Ansprüche 1 bis 2, gekennzeichnet durch das Molekulargewicht der Carbonsäuren von > 400.

4. Ionische Polymere nach mindestens einem der Ansprüche 1 bis 3, gekennzeichnet durch die Metallionen von Ca, Mg, Zn, Zr, Fe, Al und Ti mit den Gegenionen Oxid, Hydroxid, Carbonat und Hydrogencarbonat.

5. Ionische Polymere nach mindestens einem der Ansprüche 1 bis 4, gekennzeichnet durch einen Metall-Ionen-Gehalt der bis zu 90 Gew.-% Salzzusatz, bevorzugt bis 40 %, besonders bevorzugt bis 20 Gew.-% entspricht.

6. 1-Komponentiges feuchtigkeitshärtendes Ausgangsgemisch zur Herstellung der ionischen Polymeren nach Anspruch 1 und 2, gekennzeichnet durch eine Mischung von Anhydriden und Metallsalzen.

7. Herstellung der ionischen Polymere nach mindestens einem der Ansprüch 1 bis 5, dadurch gekennzeichnet, daß die Carbonsäure oder Anhydride auf einen Untergrund aufgetragen wird, der die mehrwertigen Metall-Ionen bereits enthält.

8. Herstellung der Polymeren nach mindestens einem der Ansprüche 1 bis 5 durch eine Aushärtung der Mischung aus Carbonsäuren und Metallionen bei Raumtemperatur (20 °C ± 15 °C).

9. Verwendung der ionischen Polymere nach mindestens einem der Ansprüche 1 bis 5 als Klebstoffe, insbesondere als Dispersions-, Haft-, Schmelz- und 2-Komponenten-Klebstoff sowie als Verpackungs- und Dach-Klebstoff.

10. Verwendung der ionischen Polymere nach mindestens einem der Ansprüche 1 bis 5 als Spachtelmasse und Dichtstoff.

11. Verwendung der ionischen Polymere nach mindestens einem der Ansprüche 1 bis 5 für Beschichtungen.

12. Verwendung der ionischen Polymere nach mindestens einem der Ansprüche 1 bis 5 in Form von Dispersionen.

13. Verwendung der ionischen Polymere nach mindestens einem der Ansprüche 1 bis 5 als Füllstoff, insbesondere als Flammschutzmittel für Kunststoffe.

## Claims

1. Ionic polymers obtainable simply by linking polyvalent metal ions and carboxylic acids by salt bridges, characterized in that the carboxylic acids are based on fats and oils and have a molecular weight of greater than 200 and in that short-chain polybasic acids having molecular weights of <200 may also be used in quantities of less than 30%.

2. Ionic polymers as claimed in claim 1, characterized in that the carboxylic acids are 1- to 10-basic and preferably 2- to 5-basic.

3. Ionic polymers as claimed in at least one of claims 1 and 2, characterized by a molecular weight of the carboxylic acids of > 400.

4. Ionic polymers as claimed in at least one of claims 1 to 3, characterized by the metal ions of Ca, Mg, Zn, Zr, Fe, Al and Ti with the counterions oxide, hydroxide, carbonate and hydrogen carbonate.

5. Ionic polymers as claimed in at least one of claims 1 to 4, characterized by a metal ion content of up to 90% by weight, preferably up to 40% by weight and, more preferably, up to 20% by weight of the salt addition.

6. A one-component, moisture-curing starting mixture for the production of the ionic polymers claimed in claims 1 and 2, characterized by a mixture of anhydrides and metal salts.

7. The production of the ionic polymers claimed in at least one of claims 1 to 5, characterized in that the carboxylic acid or anhydride is applied to a substrate already containing the polyvalent metal ions.

8. The production of the polymers claimed in at least one of claims 1 to 5 by curing of the mixture of carboxylic acids and metal ions at room temperature (20°C ± 15°C).

9. The use of the ionic polymers claimed in at least one of claims 1 to 5 as adhesives, particularly emulsion-based, contact, hotmelt and 2-component adhesives and as a packaging and roof adhesive.

10. The use of the ionic polymers claimed in at least one of claims 1 to 5 as a surfacer and sealant.

11. The use of the ionic polymers claimed in at least one of claims 1 to 5 for coatings.

12. The use of the ionic polymers claimed in at least one of claims 1 to 5 in the form of dispersions.

13. The use of the ionic polymers claimed in at least one of claims 1 to 5 as a filler, more particularly as a flameproofing agent for plastics.

## Revendications

1. Polymères ioniques, obtenus par la seule liaison entre des ions métalliques polyvalents et des acides carboniques par ponts salins,
caractérisé en ce que
les acides carboniques sont à base d'huiles et de graisses et qu'ils ont un poids moléculaire de plus de 200, où, le cas échéant, des acides polyvalents à chaîne courte ayant un poids moléculaire de < 200 peuvent être utilisés conjointement en proportions < 30 %.

2. Polymères ioniques selon la revendication 1,
caractérisés en ce que
les acides carboniques ont une valence de 1 à 10, de préférence de 2 à 5.

3. Polymères ioniques selon au moins une des revendications 1 à 2,
caractérisés en ce que
le poids moléculaire des acides carboniques est de > 400.

4. Polymères ioniques selon au moins une des revendication 1 à 3,
caractérisés par
les ions métalliques de Ca, Mg, Zn, Zr, Fe, Al et Ti avec les contre-ions oxyde, hydroxyde, carbonate et carbonate d'hydrogène.

5. Polymères ioniques selon au moins une des revendication 1 à 4,
caractérisés par
une teneur en ions métalliques correspondant à une addition de sel de jusqu'à 90 % en poids, de préférence jusqu'à 40 % en poids, de préférence en particulier jusqu'à 20 % en poids.

6. Mélange initial à un composant durcissant à l'humidité selon les revendications 1 et 2,
caractérisé par
un mélange d'anhydrides et de sels métalliques.

7. Fabrication des polymères ioniques selon au moins une des revendications 1 à 5,
caractérisée en ce que
l'acide carbonique ou l'anhydride est appliqué sur un support contenant déjà les ions métalliques polyvalents.

8. Fabrication de polymères selon au moins une des revendications 1 à 5 par durcissement du mélange composé d'acides carboniques et d'ions métalliques à température ambiante (20°C ± 15°C).

9. Utilisation des polymères ioniques selon au moins une des revendications 1 à 5 comme adhésifs, particulièrement comme colles en dispersion, colle d'adhérence fusible et à deux composants ainsi que comme adhésifs d'emballage et de toiture.

10. Utilisation des polymères ioniques selon au moins une des revendications 1 à 5 comme pâte à reboucher et produit d'étanchéité.

11. Utilisation des polymères ioniques selon au moins une des revendications 1 à 5 pour des enductions.

12. Utilisation des polymères ioniques selon au moins une des revendications 1 à 5 sous forme de dispersions.

13. Utilisation des polymères ioniques selon au moins une des revendications 1 à 5 comme charge, particulièrement comme couche protectrice contre les flammes pour les matières plastiques.
